# EUROPEAN PATENT SPECIFICATION

(11) **EP 3 225 395 B1**
(45) Date of publication and mention of the grant of the patent: **10.11.2021**
(21) Application number: 15862608.5
(22) Date of filing: 24.11.2015
(51) Int. Cl.: B41J 2/01, A61J 3/06, B41J 2/165, B41J 3/407, B41J 2/515, B41J 25/00, B41J 3/54, A61J 3/00

(54) **TABLET PRINTING DEVICE AND TABLET PRINTING METHOD**
TABLETTENBEDRUCKUNGSVORRICHTUNG UND TABLETTENBEDRUCKUNGSVERFAHREN
DISPOSITIF D'IMPRESSION DE COMPRIMÉ ET PROCÉDÉ D'IMPRESSION DE COMPRIMÉ

(30) Priority: 29.11.2014 JP 2014242672; 30.09.2015 JP 2015195060
(43) Date of publication of application: 04.10.2017
(73) Proprietor: Shibaura Mechatronics Corporation, Yokohama-shi, Kanagawa 247-8610 (JP)
(72) Inventor: AOYAGI,Hitoshi, Yokohama-shi Kanagawa 247-8610 (JP); OGIMOTO,Shinichi, Yokohama-shi Kanagawa 247-8610 (JP)
(74) Representative: Kramer Barske Schmidtchen Patentanwälte PartG mbB
(86) International application number: PCT/JP2015/082956
(87) International publication number: WO 2016/084812

(56) References cited:
- WO-A1-2009/025371
- WO-A1-2014/013974
- JP-A- 2005 517 593
- JP-A- 2011 020 325
- US-A1- 2010 066 779
- US-A1- 2011 128 557

## Description

### [Technical Field]

Embodiments described herein relate generally to a tablet printing device and a tablet printing method.

### [Background Art]

There is a known technology of printing characters, letters, symbols, or the like on tablets using an inkjet applicator head.

In such a tablet printing device, tablets are sequentially conveyed in a single line by a conveyer. When the tablets pass under the applicator head of an inkjet system arranged above the conveyor, ink is ejected from the nozzle of the applicator head to print a character, a letter or symbol set in advance on the tablets.

If the applicator head of the inkjet system is continuously used, for example, the periphery of the nozzle of the applicator head is wet with ink when the ink is ejected. As a result, a trouble such as ejection bending, in which a liquid droplet of the ejected ink is pulled by the ink adhering to the periphery of the nozzle and is discharged diagonally, is likely to occur.

For this reason, maintenance, such as wiping (cleaning) of the nozzle surface of the applicator head, is periodically performed to maintain the applicator head in a normal state.

Therefore, in the conventional printing device, it is necessary to stop the conveyance of the tablets every time when the maintenance of the applicator head is required. Accordingly, printing on the tablets is interrupted during this period, resulting in a decrease in the productivity.

Although the productivity can be improved by conveying the tablets in a plurality of lines, this also has similar problems.

### [Prior Art Document]

### [Patent Document]

[Patent Document 1] Japanese Unexamined Patent Application Publication No. Hei7-081050
[Patent Document 2] US 2011/128557 A1 discloses a tablet printing apparatus for multi-colour printing on tablets; the printing apparatus comprises a conveying belt for conveying the tablets in a moving direction, an ink-jet printer disposed in the middle of the moving direction of the conveying belt for performing non-contact printing onto surfaces of the tablets conveyed by the conveying belt.

### [Summary of the Invention]

### [Problems to be Solved by the Invention]

An object of the present invention is to provide a tablet printing device and a tablet printing method capable of improving the productivity as well as reducing the downtime of printing due to the maintenance of the applicator head.

### [Means of Solving the Problems]

The aforementioned object is achieved by a tablet printing device according to claim 1 and a tablet printing method according to claim 3.

Further improvements are given in the dependent claims.

### [Effects of the Invention]

According to the embodiments, the productivity can be improved.

### [Brief Description of the Drawings]

[Fig. 1] Fig. 1 is a schematic front view of a tablet printing device according to a first embodiment.
[Fig. 2] Fig. 2 is a plan view illustrating an enlarged main portion of the tablet printing device of Fig. 1.
[Fig. 3] Fig. 3 is a schematic plan view for explaining the operation of the first embodiment.
[Fig. 4] Fig. 4 is a schematic plan view for explaining the operation of the first embodiment.
[Fig. 5] Fig. 5 is a schematic plan view for explaining the operation of the first embodiment.
[Fig. 6] Fig. 6 is a schematic plan view for explaining the operation of the first embodiment.
[Fig. 7] Fig. 7 is a plan view illustrating an enlarged main portion of a tablet printing device according to a second embodiment.
[Fig. 8] Fig. 8 is a diagram illustrating a relationship between conveying lines of tablets and an applicator head used in printing in the second embodiment.
[Fig. 9] Fig. 9 is a schematic plan view for explaining the operation of the second embodiment.
[Fig. 10] Fig. 10 is a diagram illustrating a relationship between conveying lines of tablets and an applicator head used in printing according to a third embodiment.
[Fig. 11] Fig. 11 is a schematic plan view for explaining the operation of the third embodiment.
[Fig. 12] Fig. 12 is a schematic plan view for explaining the operation of the third embodiment.
[Fig. 13] Fig. 13 is a schematic plan view for explaining the operation of the third embodiment.
[Fig. 14] Fig. 14 is a schematic plan view for explaining the operation of the third embodiment.
[Fig. 15] Fig. 15 is a schematic plan view for explaining the operation of the third embodiment.
[Fig. 16] Fig.16 is a plan view illustrating an enlarged main portion of a tablet printing device according to a fourth embodiment.
[Fig. 17] Fig. 17 is a plan view illustrating an enlarged main portion of a tablet printing device according to a fifth embodiment.
[Fig. 18] Fig. 18 is a plan view illustrating an enlarged main portion of a tablet printing device according to a sixth embodiment.

### [Modes for Carrying Out the Invention]

The fifth embodiment is covered by the claims, while the other embodiments described in the following are not covered by the claims but described for a better understanding of the claimed invention.

### (First Embodiment)

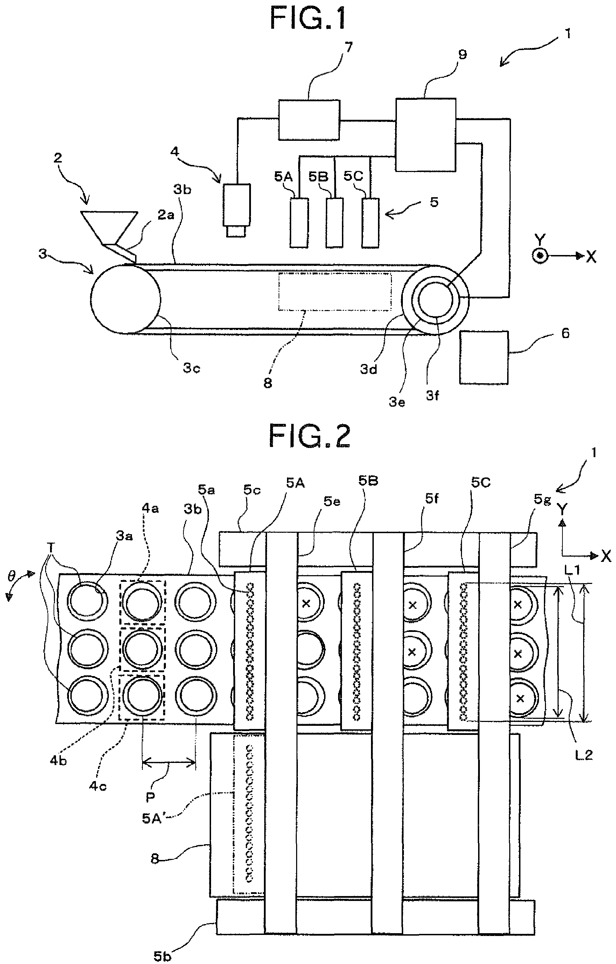

A first embodiment is described with reference to Figs. 1 to 6

Fig. 1 is a schematic front view of a tablet printing device 1

The tablet printing device 1 includes: a hopper 2 that supplies tablets T (see Fig. 2); a conveyor 3 that conveys the tablets T, which have been supplied by the hopper 2, arranged at regular intervals in a plurality of lines (in this embodiment, three lines); an image pickup device 4 arranged above the conveyor 3 to photograph the tablets T conveyed by the conveyor 3; a head unit 5 that is located above the conveyor 3 on the downstream side of the image pickup device 4 in the conveyance direction of the tablets T; a tablet collecting device 6 arranged at the downstream end of the conveyor 3; an image processing device 7 connected to the image pickup device 4; a maintenance device 8 (see Fig. 2) of the head unit 5; and a controller 9 that controls the conveyor 3, the head unit 5, and the image processing device 7.

The hopper 2 includes a chute portion 2a that contains a number of the tablets T and supplies the tablets T according to the number of lines of the tablets T conveyed by the conveyor 3.

The conveyor 3 includes: an annular belt 3b (see Fig. 2) in which recesses 3a (see Fig. 2) for containing the tablets T one by one are arrayed at regular intervals P in three lines in the conveyance direction of the tablets T; a pair of pulleys 3c and 3d over which the belt 3b is stretched; and a drive part 3e that rotationally drive one of the pulleys 3c and 3d. The drive part 3e is provided with a position detector 3f such as a rotary encoder. A detection signal of the position detector 3f is sent to the controller 9. The controller 9 can obtain information such as the position, speed, and movement amount of the belt 3b of the conveyor 3 based on the signal. The conveyor 3 functions as a conveying device.

As illustrated in Fig. 2, the image pickup device 4 includes three cameras 4a, 4b and 4c. The cameras 4a, 4b and 4c are fixed such that each of them corresponds to one of the three lines of recesses 3a. The imaging visual field of each of the cameras 4a, 4b and 4c is set to a size in which only one tablet T conveyed in the recess 3a can enter, and the tablet T in the recess 3a in front/behind thereof and the tablet T in the recess 3a of an adjacent line cannot enter.

As illustrated in Fig. 2, the head unit 5 includes three ink-jet applicator heads 5A, 5B and 5C. The applicator heads 5A, 5B and 5C are arranged above the conveyor 3 in parallel along the conveyance direction of the tablets T. The arrangement interval between the applicator heads 5A, 5B and 5C is set to, for example, an integer multiple of the arrangement interval P of the recesses 3a of the conveyor 3, and, in this embodiment, it is set to twice as large as the arrangement interval P. The distance between the nozzle array of the applicator head 5A located on the most upstream side in the conveyance direction of the tablets T and the cameras 4a, 4b and 4c is also set to an integer multiple of the arrangement interval P of the recesses 3a. In this embodiment, it is also set to twice as large as the arrangement interval P. Each of the applicator heads 5A, 5B and 5C is provide with a plurality of nozzles 5a arranged in a direction perpendicular to the conveyance direction of the tablets T. The arrangement length L1 of the nozzles 5a of each of the applicator heads 5A, 5B and 5C is set to be slightly longer than the width-direction length L2 of the tablets T conveyed in three lines.

The width-direction length L2 of the tablets T conveyed in three lines refers to the length from the outer edge of one of the two tablets T in lines of the three lines located on both sides to the outer edge of the other (from the upper end to the lower end in Fig. 2) in a direction (y direction) perpendicular to the conveyance direction. Each of the tablets T in one of the recesses 3a is conveyed in a state in which its center is positioned on a predetermined line. However, the tablet T can move in the recess 3a, and the center thereof may be deviated from the predetermined line. Accordingly, the arrangement length L1 of the nozzles 5a is set to be equal to or longer than a length taking into consideration the variation. That is, the arrangement length L1 of the nozzles 5a is set to be equal to or longer than the width-direction length L2 (maximum length) that is the maximum length in consideration of the variation of the positions of the tablets T on the belt 3b, the variation of the outer diameter of the tablets T, and the like. In the first embodiment, because of the presence of the recesses 3a, the maximum length is the distance from the outer edge of one of the two recesses 3a in lines of the three lines located on both sides to the outer edge of the other (from the upper end to the lower end indicated by L2 in Fig. 2) in the Y direction.

The applicator heads 5A, 5B and 5C are supported to be horizontally movable by horizontal movement devices 5e, 5f, and 5g arranged in a direction perpendicular to the conveyance direction. The applicator heads 5A, 5B and 5C are movable to a maintenance position (the position indicated by two-dot chain line 5A' in Fig. 2) on the maintenance device 8 provided adjacent to the conveyor 3 and a printing position on the conveyor 3. A single axis robot of a ball screw type, a linear motor type, an air cylinder type or the like can be used for the horizontal movement devices 5e, 5f, and 5g.

The horizontal movement devices 5e, 5f, and 5g are supported at the both ends by a pair of gate-shaped support frames 5b and 5c arranged with the conveyor 3 between them.

Referring back to Fig. 1, the tablet collecting device 6 is a box-shaped container arranged at the end of the conveyor 3 on the downstream side in the conveyance direction, and has an opening in its upper end. The tablets T are dropped into the opening at the end of the conveyor 3 to be stored in the tablet collecting device 6.

The image processing device 7 is connected to the image pickup device 4, i.e., the three cameras 4a, 4b and 4c. The image processing device 7 takes in images captured by the cameras 4a, 4b and 4c, and detects the positional deviation in the rotation (θ) direction and the X and Y directions of the tablets T using a known image processing technique.

The positional deviation in the X and Y directions is a positional deviation of the tablet T in the recess 3a. The image processing device 7 detects how much the tablet T is deviated from the center of the recess 3a. Here, the conveyance direction of the tablet T is defined as the X direction, and the direction perpendicular thereto is defined as the Y direction.

The positional deviation in the θ direction refers to the rotation deviation of the tablet T in the horizontal plane. When the tablet T has a directionality, such as when the tablet T is provided with a dividing line, or formed in an elliptical shape, an oval shape, a rectangular shape, or the like, the positional deviation in the θ direction is detected. For example, when a dividing line is formed in the tablet T, the state where the direction of the dividing line is parallel to the Y direction is set as 0 degree, and θ deviation is obtained in units of 1 degree in the range of 0 degree to 179 degrees. If the shape of the tablet T is not line-symmetric with respect to the dividing line, the θ deviation may be obtained in the range of 0 degree to 359 degrees. Besides, when the tablet T is in a form having no directionality, there is no need to detect the θ deviation.

The image processing device 7 sends positional deviation information of the tablet T detected in the X, Y, and θ directions to the controller 9. The image processing device 7 adds the identification information of the cameras 4a, 4b and 4c to the positional deviation information upon transmitting the information. With this, the controller 9 can identify that the sent positional deviation information is one of the positional deviation information of the tablet T located in the first line, the positional deviation information of the tablet T located in the second line, or the positional deviation information of the tablet T located in the third line.

The maintenance device 8 is arranged at a position adjacent to the side of the conveyor 3 and corresponding to the head unit 5. The maintenance device 8 includes: a wiping device for cleaning the lower surface of the applicator heads 5A, 5B and 5C, where the nozzles 5a are opened; a non-ejection detection camera for detecting the ejection or non-ejection of ink as a liquid from each of the nozzles 5a; an ink receiver for receiving ink ejected upon detecting the ejection or non-ejection; and the like (all not illustrated). Each of them is movable to a position corresponding to the applicator heads 5A, 5B and 5C moved to their respective maintenance positions so that the maintenance of the applicator heads 5A, 5B and 5C can be performed.

The controller 9 controls the drive of the conveyor 3, the ejection of ink from the nozzles 5a of the applicator heads 5A, 5B and 5C, the drive of the horizontal movement devices 5e, 5f, and 5g, and the image processing device 7. The controller 9 includes a storage that stores printing patterns such as characters, letters and symbols to be printed on the tablets T, printing data composed of a printing position on the tablets T where a character, a letter or a symbol is to be printed and the like, movement speed information of the belt 3b of the conveyor 3, and the like.

The controller 9 sets printing conditions in the X, Y and θ directions for the tablet T based on the information on the positional deviation in the X, Y and θ directions of each tablet T transmitted from the image processing device 7.

The controller 9 determines the nozzle 5a to be used for current printing based on the positional deviation in the Y direction. For example, it is assumed that five nozzles are used for printing the tablets T from among the plurality of nozzles 5a of each of the applicator heads 5A, 5B and 5C. In this case, if the amount of positional deviation of the tablet T in the Y direction corresponds to one pitch of the arrangement interval of the nozzles 5a, five nozzles, which are shifted by one pitch in the direction of the positional deviation of the tablet T as compared to when the tablet T is not deviated in the Y direction, are used.

Besides, the controller 9 determines the timing to start printing on the tablets T based on the positional deviation in the X direction. For example, when the tablet T is deviated by a distance ΔX to the upstream side in the conveyance direction, printing is set to be started at the timing delayed by the time necessary for the belt 3b of the conveyor 3 to move by the distance ΔX as compared to the case where there is no positional deviation of the tablet T in the X direction.

Further, the controller 9 sets printing conditions rotated according to the rotational displacement of the tablet T based on the positional deviation in the θ direction. For example, 180 types of print data are obtained by rotating the orientation of a print pattern, such as a character, a letter, a symbol, or the like, one degree by one degree in the range of 0 degree to 179 degrees, and the print data are registered in the storage of the controller 9. With this, print data of an angle corresponding to the rotational displacement detected can be selected to set the printing conditions.

Next, the operation of the tablet printing device 1 is described.

First, print data to be printed on the tablet T as a current printing target and the like are stored in the storage of the controller 9. Further, the tablet T of the current printing target is inserted into the hopper 2.

When the tablet printing device 1 is driven, supply of the tablets T to the conveyer 3 from the hopper 2 is started. The tablets T are supplied by the chute portion 2a of the hopper 2 in three lines according to the arrangement of the three lines of the recesses 3a of the conveyor 3, and sequentially fed into the three lines of the recesses 3a of the conveyor 3 to be accommodated.

The tablets T accommodated in the recesses 3a are conveyed at a moving speed set in advance by the driving of the belt 3b.

The tablets T being conveyed are photographed by the cameras 4a, 4b and 4c at the timing when they pass through under the cameras 4a, 4b and 4c. The photography timing can be obtained based on a detection signal from the position detector 3f by teaching in advance the relationship between the detection position of the position detector 3f of the conveyor 3 and the positions of the recesses 3a.

Photographic images captured by the cameras 4a, 4b and 4c are sent to the image processing device 7. The image processing device 7 detects the positional deviation of the tablets T in the X, Y, and θ directions.

The positional deviation information of the tablets T detected by the image processing device 7 is sent to the controller 9. The controller 9 sets printing conditions to be used for printing on the tablets T in which the positional deviation is detected based on the positional deviation information.

Then, ink is ejected from the nozzles 5a of the applicator heads 5A, 5B and 5C at the timing when the tablets T, which have undergone the detection of positional deviation, pass through under the applicator heads 5A, 5B and 5C to print a character, a letter, a symbol, or the like on the tablets T.

The tablet T having a print thereon is conveyed to the downstream side end of the conveyor 3, and dropped from the conveyer 3 to be stored in the tablet collecting device 6.

By the repetition of such operation, printing is continuously performed on the tablets T which are conveyed as being accommodated in the recesses 3a of the conveyor 3.

Thereafter, in this embodiment, the use regions of the plurality of nozzles 5a are switched in each of the applicator heads 5A, 5B and 5C through the following operation.

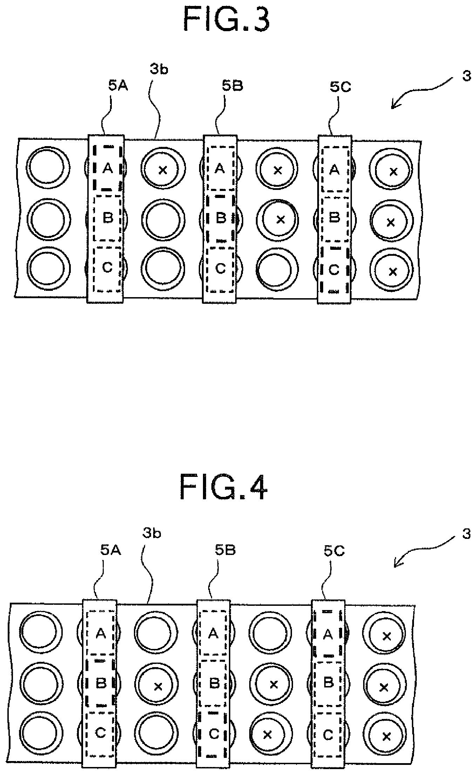

As illustrated in Fig. 2, the nozzle arrays of the applicator heads 5A, 5B and 5C have an arrangement length L1 which is slightly longer than the length L2 of the tablets T in the width direction conveyed in three lines on the conveyor 3. The nozzle arrays of the applicator heads 5A, 5B and 5C are divided into three sections A to C (see Fig. 3) corresponding to the positions of the recesses 3a of the conveyor 3. The plurality of nozzles 5a located in the sections A to C are used for printing on the tablets T in order from the section A to section C. That is, the sections are set correspondingly to lines in which the tablets T are conveyed (correspondingly to the printing).

The nozzle arrays of the applicator heads 5A, 5B and 5C are divided into predetermined sections. Each of the sections secures the required number of nozzles in the nozzle arrays for printing on the tablets T. The sections are defined to cover the length of the tablet T perpendicular to the conveyance direction in the horizontal plane, and to secure the number of nozzles sufficient for printing on the tablets T in consideration of variations in the positions of the tablets T on the belt 3b as well as variations in the outer diameter of the tablets T. Each of the sections includes a little more nozzles than is required with some margin.

Incidentally, the sections are defined to cover a little longer length than the length of the tablet T perpendicular to the conveyance direction, and provided by dividing the length of the nozzle array of the applicator head 5A into integer parts. In this embodiment, the sections are defined in advance in the same number (three in Fig. 3) as the number of lines of the tablets T conveyed in one of the applicator heads 5A, 5B and 5C.

### (Operation step 1)

As illustrated in Fig. 3, first, printing is performed on the tablets T in the first line (the line illustrated at the top in Fig. 3) on the conveyor 3 by the use of the nozzles 5a located in the section A (indicated by a thick broken line frame) of the applicator head 5A. Then, printing is performed on the tablets T in the second line (the line illustrated in the middle in Fig. 3) by the use of the nozzles 5a located in the section B (indicated by a thick broken line frame) of the applicator head 5B. In addition, printing is performed on the tablets T in the third line (the line illustrated at the bottom in Fig. 3) by the use of the nozzles 5a located in the section C (indicated by a thick broken line frame) of the applicator head 5C.

### (Operation step 2)

When a preset time (set time) has elapsed since the start of printing using the nozzles 5a located in the sections A to C of the applicator heads 5A, 5B and 5C, as illustrated in Fig. 4, The section to be used in the applicator head 5A is switched from the section A to the section B indicated by a thick broken line frame, and printing is performed on the tablets T in the second line by the applicator head 5A. The section to be used in the applicator head 5B is switched from the section B to the section C indicated by a thick broken line frame, and printing is performed on the tablets T in the third line by the applicator head 5B. Further, the section to be used in the applicator head 5C is switched from the section C to the section A indicated by a thick broken line frame, and printing is performed on the tablets T in the first line by the applicator head 5C.

### (Operation step 3)

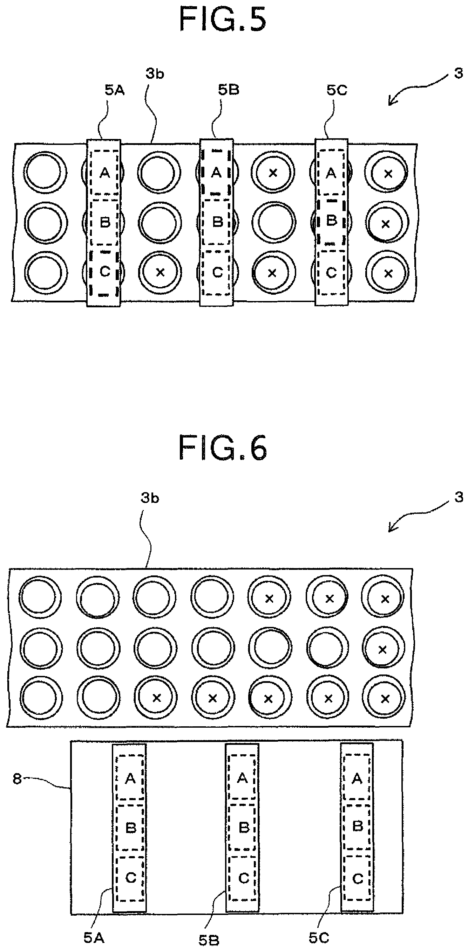

When the set time has elapsed again, as illustrated in Fig. 5, the section to be used in the applicator head 5A is switched from the section B to the section C indicated by a thick broken line frame, and printing is performed on the tablets T in the third line by the applicator head 5A . The section to be used in the applicator head 5B is switched from the section C to the section A indicated by a thick broken line frame, and printing is performed on the tablets T in the first line by the applicator head 5B. Further, the section to be used in the applicator head 5C is switched from the section A to the section B indicated by a thick broken line frame, and printing is performed on the tablets T in the second line by the applicator head 5C.

In this embodiment, the preset time (set time) for switching the sections A to C used for printing refers to the upper limit value of the time during which printing on the tablets T can be continuously performed in a state where ink can be stably discharged from each of the nozzles 5a of the applicator heads 5A, 5B and 5C without maintenance such as wiping in the applicator heads 5A, 5B and 5C. The preset time is set in advance in the storage of the controller 9. The controller 9 has a timer function, and counts the elapsed time after the start of printing by the applicator heads 5A, 5B and 5C. When the elapsed time reaches the preset time stored in the storage, the controller 9 controls the switching of the sections A to C. The controller 9 resets the count value every time the count value reaches the set time, and starts counting again from zero.

### (Operation step 4)

After operation step 3, when the elapsed time again reaches the set time, the driving of the conveyer 3 is stopped to interrupt the printing on the tablets T. As illustrated in Fig. 6, the applicator heads 5A, 5B and 5C are moved to their respective maintenance positions such that maintenance, such as wiping, is performed on the applicator heads 5A, 5B and 5C by the maintenance device 8. That is, the maintenance of the applicator heads 5A, 5B and 5C is performed when printing has been performed once in all the sections A to C set in the applicator heads 5A, 5B and 5C.

Upon completion of the maintenance of the applicator heads 5A, 5B and 5C by the maintenance device 8, the process returns to operation step 1. Thereafter, in the same manner as above, the maintenance of the applicator heads 5A, 5B and 5C is performed repeatedly each time printing has been performed once in all the sections A to C set in the applicator heads 5A, 5B and 5C.

On the occasion of switching the sections A to C to be used for printing, the applicator heads 5A, 5B and 5C in charge of printing on the tablets T in each line are also switched. For example, looking at the second line, printing is performed in the section B of the applicator head 5B in operation step 1. Then, when the operation pattern is switched from operation step 1 to operation step 2, the applicator head to be used for printing on the tablets T is switched from the applicator head 5B to the applicator head 5A located on the upstream side in the conveyance direction. When the operation pattern is switched from operation step 2 to operation step 3, the applicator head to be used is switched from the applicator head 5A to the applicator head 5C located on the downstream side in the conveyance direction.

In such a case, if the printing start and the printing stop in the two applicator heads are switched at the same time, when the applicator head is switched to the applicator head on the upstream side in the conveyance direction of the tablets T as in the former case, printing is not performed on the tablets T located between the applicator heads 5A and 5B. On the other hand, when the applicator head is switched to the applicator head on the downstream side in the conveyance direction of the tablets T as in the latter case, printing is performed twice on the tablets T located between the two applicator heads 5A and 5C.

Therefore, in the former case, the controller 9 performs the switching control such that printing by the section B of the applicator head 5B is continued from the start of printing by the section B of the applicator head 5A located on the upstream side until the tablet T printed by the section B of the applicator head 5A reaches the applicator head 5B. When the tablet T printed by the section B of the applicator head 5A reaches the applicator head 5B, the section to perform printing is switched to the section C in the applicator head 5B, and printing is started on the tablets T in the third line. In the latter case, the controller 9 performs the switching control such that, after the end of printing by the section B of the applicator head 5A, printing by the section B of the applicator head 5C starts at the timing when the tablet T printed by the section B of the applicator head 5A passes through the applicator head 5C.

This makes it possible to prevent the occurrence of erroneous printing in which printing is not performed on a tablet, and printing is performed twice on a tablet.

According to the first embodiment described above, each of the nozzle arrays of the applicator heads 5A, 5B and 5C has the arrangement length L1 slightly longer than the width-direction length L2 of the tablets T conveyed on the conveyer 3 in three lines, and is divided into three sections A to C in advance so as to correspond to printing on the tablets T in each line. The nozzles 5a in each of the sections A to C are switched each time the set time (the upper limit value of the time during which printing on the tablets T can be continuously performed in a state where ink can be stably discharged from each of the nozzles 5a of the applicator heads 5A, 5B and 5C without maintenance such as wiping) has elapsed for use in printing on the tablets T. Therefore, even if the time in which maintenance is required has elapsed with respect to one section of the applicator heads 5A, 5B and 5C, printing can be continued using the nozzles 5a in another section unused in the applicator heads 5A, 5B and 5C without immediately stopping printing on the tablets T. This reduces the frequency of interrupting printing on the tablets T due to the maintenance of the applicator heads 5A, 5B and 5C. Thus, the productivity can be improved.

### (Second Embodiment)

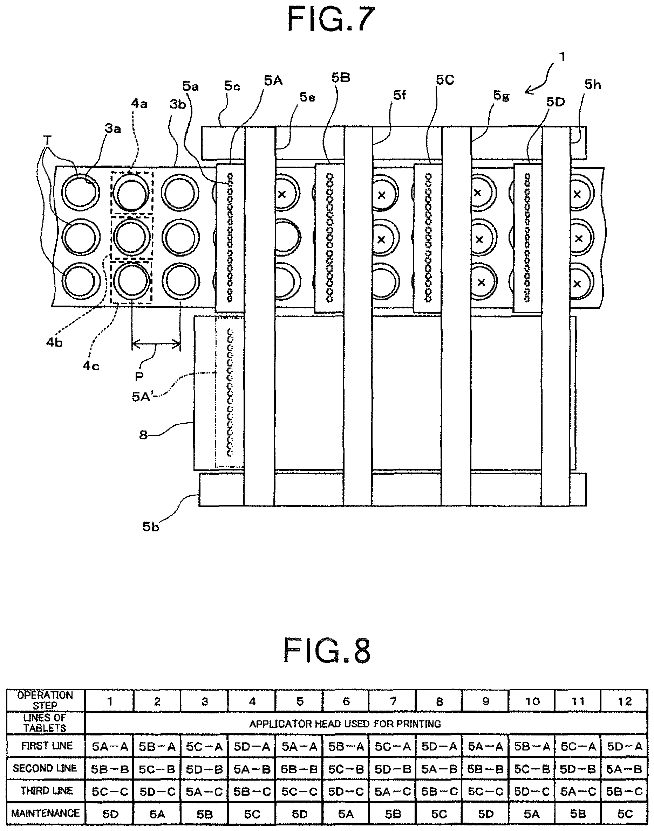

In the following, a second embodiment is described with reference to Figs. 7 to 9

A tablet printing device of the second embodiment has basically the same configuration as that of the tablet printing device 1 of the first embodiment except the presence of one more applicator head, i.e., four applicator heads.

As illustrated in Fig. 7, in the tablet printing device 1 of the second embodiment, four applicator heads 5A to 5D are arranged in parallel along the conveyance direction at an interval twice as wide as the arrangement interval P of the recesses 3a of the conveyor 3. The applicator heads 5A to 5D are supported by horizontal movement devices 5e to 5h, respectively, and are each individually movable to a maintenance position on the maintenance device 8 and a printing position on the conveyor 3.

The tablet printing device 1 of the second embodiment operates according to the switching order illustrated in Fig. 8. Printing is performed on the tablets T in the same manner as in the first embodiment.

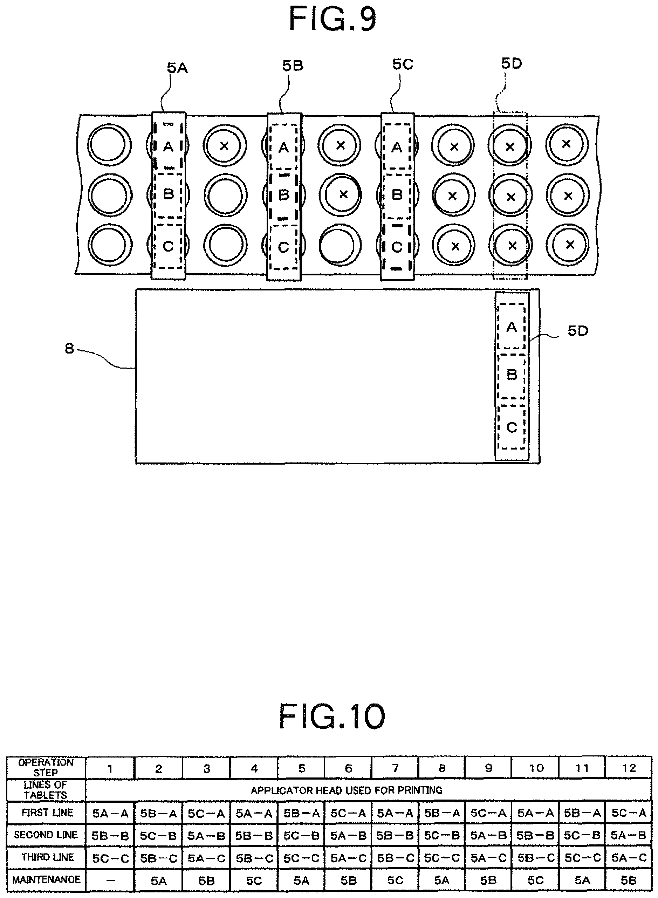

First, as illustrated in Fig. 9, printing is performed on the tablets T in the first line on the conveyor 3 using the nozzles 5a located in the section A of the applicator head 5A. Printing is performed on the tablets T in the second line on the conveyor 3 using the nozzles 5a located in the section B of the applicator head 5B. Printing is performed on the tablets T in the third line on the conveyor 3 using the nozzles 5a located in the section C of the applicator head 5C (operation step 1). Simultaneously with the start of printing by each of the applicator heads 5A to 5C, the controller 9 starts counting the elapsed time.

When the count of the elapsed time counted by the controller 9 reaches the set time stored in the storage of the controller 9, the applicator head used for printing on the tablets T in the first line is switched from the applicator head 5A to the applicator head 5B. Specifically, the nozzles 5a used for printing on the tablets T in the first line are switched from those located in the section A of the applicator head 5A to those located in the section A of the applicator head 5B. At the same time, the applicator head used for printing on the tablets T in the second line is switched from the applicator head 5B to the applicator head 5C. The applicator head used for printing on the tablets T in the third line is switched from the applicator head 5C to the applicator head 5D (operation step 2). Prior to this switching, the applicator head 5D has moved from the maintenance position indicated by the solid line in Fig. 9 to the printing position indicated by the two-dot chain line. Then, the applicator head 5A is moved to the maintenance position to perform the maintenance of the applicator head 5A. The controller 9 resets the count value of the elapsed time at the point when the count value reaches the set time, and starts counting again from zero.

The maintenance of the applicator head 5A is completed before the count of the elapsed time counted by the controller 9 reaches the set time again, and the applicator head 5A is moved from the maintenance position to the printing position to be kept on standby. When the count of the elapsed time counted by the controller 9 reaches the set time again, the applicator head used for printing on the tablets T in the first line is switched from the applicator head 5B to the applicator head 5C. The applicator head used for printing on the tablets T in the second line is switched from the applicator head 5C to the applicator head 5D. The applicator head used for printing on the tablets T in the third line is switched from the applicator head 5D to the applicator head 5A (operation step 3). The applicator head 5B is moved to the maintenance position to perform the maintenance of the applicator head 5B. The controller 9 resets the count value of the elapsed time at the point when the count value reaches the set time, and starts counting again from zero. The maintenance of the applicator head 5B is completed before the count of the elapsed time counted by the controller 9 reaches the set time again, and the applicator head 5B is moved from the maintenance position to the printing position to be kept on standby.

When the count of the elapsed time counted by the controller 9 reaches the set time again, the applicator head used for printing on the tablets T in the first line is switched from the applicator head 5C to the applicator head 5D. The applicator head used for printing on the tablets T in the second line is switched from the applicator head 5D to the applicator head 5A. The applicator head used for printing on the tablets T in the third line is switched from the applicator head 5A to the applicator head 5B (operation step 4). The applicator head 5C is moved to the maintenance position to perform the maintenance of the applicator head 5C. The controller 9 resets the count value of the elapsed time at the point when the count value reaches the set time, and starts counting again from zero. The maintenance of the applicator head 5C is completed before the count of the elapsed time counted by the controller 9 reaches the set time again, and the applicator head 5C is moved from the maintenance position to the printing position to be kept on standby.

Further, when the count of the elapsed time counted by the controller 9 reaches the set time, the applicator head used for printing on the tablets T in the first line is switched from the applicator head 5D to the applicator head 5A. The applicator head used for printing on the tablets T in the second line is switched from the applicator head 5A to the applicator head 5B. The applicator head used for printing on the tablets T in the third line is switched from the applicator head 5B to the applicator head 5C (operation step 5). The applicator head 5D is moved to the maintenance position to perform the maintenance of the applicator head 5D. The controller 9 resets the count value of the elapsed time at the point when the count value reaches the set time, and starts counting again from zero. The maintenance of the applicator head 5D is completed before the count of the elapsed time counted by the controller 9 reaches the set time again, and the applicator head 5D is moved from the maintenance position to the printing position to be kept on standby.

Thereafter, according to the combination of operation steps 6 to 12 illustrated in Fig. 8, the switching operation of the applicator heads 5A to 5D is repeated in the same manner as described above. The switching operation of operation steps 1 to 12 is repeated until there are no more tablets T to be printed. In this embodiment, since operation steps 1 to 4 correspond to one cycle, operation steps 1 to 4 are repeated after operation step 5.

In this embodiment, in the switching operation of the applicator heads 5A to 5D used for printing, the applicator head used for printing on the tablets T is switched to the applicator head positioned on the upstream side or the applicator head positioned on the downstream side. Therefore, as in the first embodiment, in order to prevent erroneous printing in which printing is not performed or performed twice on a tablet, it is preferable to appropriately adjust the timing to stop the use of the applicator head for printing and to start the use of the applicator head for printing.

According to the second embodiment, the number of the applicator heads 5A to 5D is one more than the number of lines of the tablets T conveyed by the conveyor 3 such that maintenance work is performed on the applicator head not in use for printing on the tablets T. The applicator heads 5A to 5D used for printing on the tablets T are sequentially switched every time the set time elapses. Therefore, there is no need to stop printing on the tablets T for the periodic maintenance of the applicator heads 5A to 5D. Thus, the productivity can be improved.

### (Third Embodiment)

In the following, a third embodiment is described with reference to Figs. 10 to 15.

A tablet printing device of the second embodiment has basically the same configuration as that of the tablet printing device 1 of the first embodiment except the way of switching the three sections A to C of each of the applicator heads 5A, 5B and 5C.

That is, in the third embodiment, two sections are used simultaneously in any one of the three applicator heads 5A, 5B and 5C so that the maintenance of another applicator head can be performed.

The tablet printing device 1 of the third embodiment operates according to the switching order illustrated in Fig. 10. Printing is performed on the tablets T in the same manner as in the first embodiment.

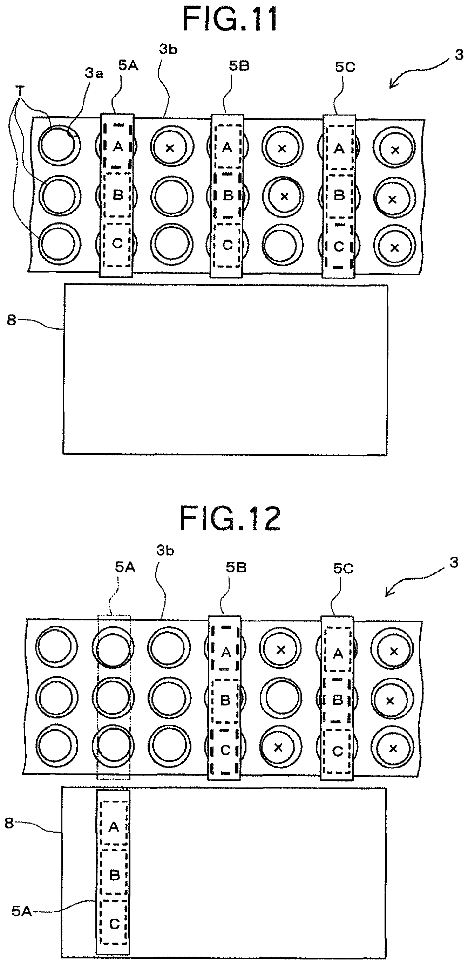

First, as illustrated in Fig. 11, printing is performed on the tablets T in the first line on the conveyor 3 using the nozzles 5a located in the section A of the applicator head 5A. Printing is performed on the tablets T in the second line on the conveyor 3 using the nozzles 5a located in the section B of the applicator head 5B. Printing is performed on the tablets T in the third line on the conveyor 3 using the nozzles 5a located in the section C of the applicator head 5C (operation step 1). Simultaneously with the start of printing by each of the applicator heads 5A to 5C, the controller 9 starts counting the elapsed time.

When the count of the elapsed time counted by the controller 9 reaches the set time stored in the storage of the controller 9, as illustrated in Fig. 12, printing is started on the tablets T in the first line using the nozzles 5a in the section A of the applicator head 5B. Printing is started on the tablets T in the third line using the nozzles 5a in the section C of the applicator head 5B. Printing is started on the tablets T in the second line using the nozzles 5a in the section B of the applicator head 5C. Printing by the applicator head 5A is stopped (operation step 2). Then, the applicator head 5A is moved to the maintenance position, and the maintenance device 8 performs the maintenance of the applicator head 5A. The controller 9 resets the count value of the elapsed time at the point when the count value reaches the set time, and starts counting again from zero.

Upon completion of the maintenance of the applicator head 5A, the applicator head 5A is moved to the printing position to be kept on standby.

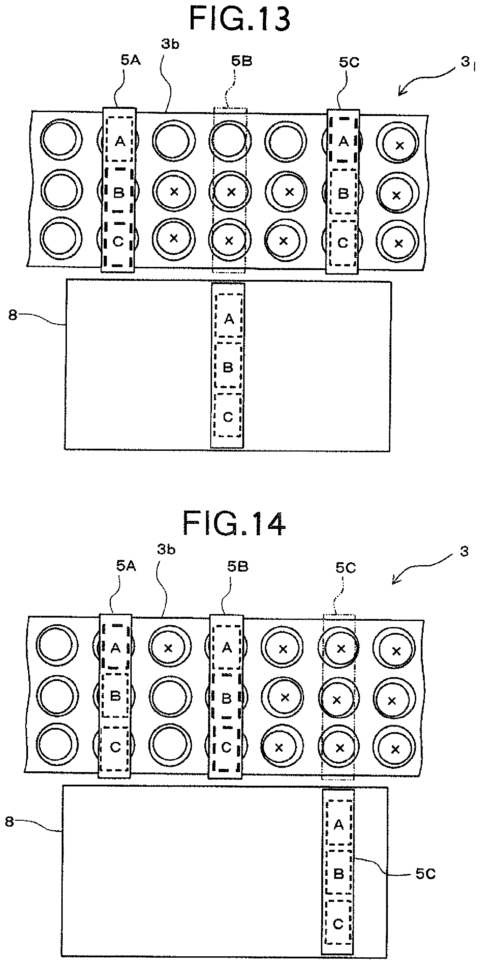

When the count of the elapsed time counted by the controller 9 reaches the set time after the applicator head used for printing on the tablets T in the first line is switched from the applicator head 5A to the applicator head 5B, as illustrated in Fig. 13, printing is started on the tablets T in the second line using the nozzles 5a in the section B of the applicator head 5A. Printing is started on the tablets T in the third line using the nozzles 5a in the section C of the applicator head 5A. Printing is started on the tablets T in the first line using the nozzles 5a in the section A of the applicator head 5C. Printing by the applicator head 5B is stopped (operation step 3). Then, the applicator head 5B is moved to the maintenance position, and the maintenance device 8 performs the maintenance of the applicator head 5B.

Upon completion of the maintenance of the applicator head 5B, the applicator head 5B is moved to the printing position to be kept on standby.

When the count of the elapsed time counted by the controller 9 reaches the set time after the applicator head used for printing on the tablets T in the first line is switched from the applicator head 5B to the applicator head 5C, and the applicator head used for printing on the tablets T in the third line is switched from the applicator head 5B to the applicator head 5A, as illustrated in Fig. 14, printing is started on the tablets T in the first line using the nozzles 5a in the section A of the applicator head 5A. Printing is started on the tablets T in the second line using the nozzles 5a in the section B of the applicator head 5B. Printing is started on the tablets T in the third line using the nozzles 5a in the section C of the applicator head 5B. Printing by the applicator head 5C is stopped (operation step 4). Then, the applicator head 5C is moved to the maintenance position, and the maintenance device 8 performs the maintenance of the applicator head 5C.

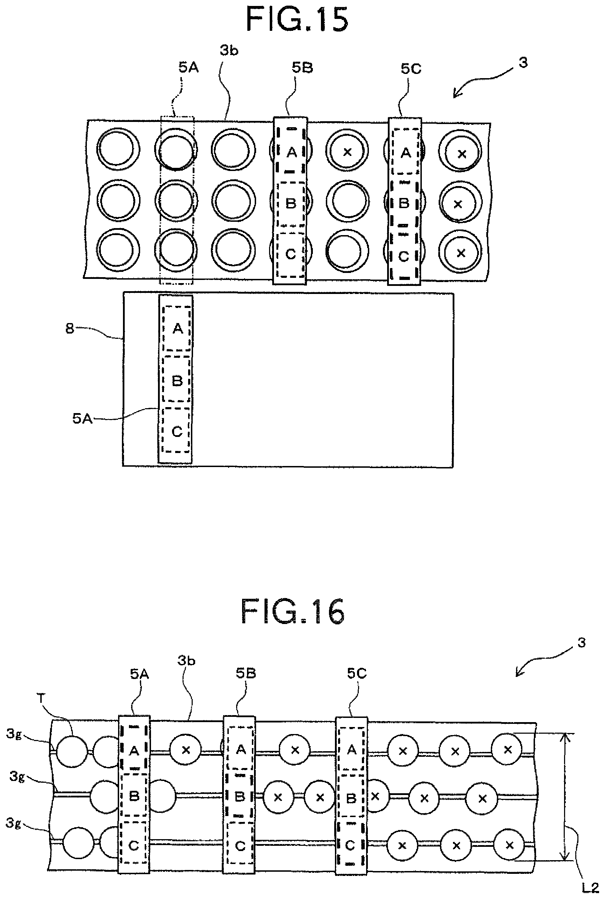

When the count of the elapsed time counted by the controller 9 reaches the set time after the applicator head used for printing on the tablets T in the first line is switched from the applicator head 5C to the applicator head 5A, as illustrated in Fig. 15, printing is started on the tablets T in the first line using the nozzles 5a in the section A of the applicator head 5B. Printing is started on the tablets T in the second line using the nozzles 5a in the section B of the applicator head 5C. Printing is started on the tablets T in the third line using the nozzles 5a in the section C of the applicator head 5C. Printing by the applicator head 5A is stopped (operation step 5). Then, the applicator head 5A is moved to the maintenance position, and the maintenance device 8 performs the maintenance of the applicator head 5A.

Thereafter, according to the combination of operation steps 6 to 12 illustrated in Fig. 10, the switching operation of the applicator heads 5A to 5C is repeated in the same manner as described above. In this embodiment, after operation step 3, the switching operation of operation steps 3 to 5 is repeated until there are no more tablets T to be printed.

In this embodiment also, in the switching operation of the applicator heads 5A to 5D used for printing, the applicator head used for printing on the tablets T is switched to the applicator head positioned on the upstream side or the applicator head positioned on the downstream side. Therefore, as in the first embodiment, in order to prevent erroneous printing in which printing is not performed or performed twice on a tablet, it is preferable to appropriately adjust the timing to stop the use of the applicator head for printing and to start the use of the applicator head for printing.

According to the third embodiment, it is possible to achieve the same effects as in the second embodiment. In addition, the number of applicator heads can be the same as the number of lines of the tablets T conveyed on the conveyor 3. In other words, the operation can be performed with fewer applicator heads as compared to the second embodiment. Thus, the device structure can be simplified.

### (Fourth Embodiment)

In the following, a fourth embodiment is described with reference to Fig. 16.

A tablet printing device of fourth embodiment is different from the tablet printing device 1 of the first embodiment in the configuration of the belt 3b and in that the three sections A to C are switched based on the number of times each of the nozzles 5a of the applicator heads 5A, 5B and 5C is driven. Otherwise, the tablet printing device of fourth embodiment is similar to that of the first embodiment. Each of the nozzles 5a of the applicator heads 5A, 5B and 5C is driven by driving an energy generating element (drive element) such as a piezoelectric element, a heat generating element, a magnetostrictive element or the like, and thereby ink is ejected from the nozzles 5a. Therefore, the number of times ink is ejected from each of the nozzles 5a can be figured out by the number of driving times.

As illustrated in Fig. 16, in the tablet printing device 1 of the fourth embodiment, the belt 3b is a flat belt and has three lines of suction slits 3g extending along the conveyance direction. The tablets T are supplied in a line on each of the suction slits 3g at random (nonuniform intervals). Thereby, each of the suction slits 3g sucks the tablets T supplied and holds them randomly on the belt 3b.

For example, each of the suction slits 3g is connected to a suction part (not illustrated) such as a suction pump, and is able to obtain a suction force when the suction part is driven. The suction force is set such that the tablets T are reliably held on the suction slits 3g, and also fall from the suction slits 3g by gravity above the tablet collecting device 6 (e.g., the pulley 3d side end of the belt 3b).

The tablets T on the belt 3b are basically conveyed in a line on each of the suction slits 3g with their centers positioned on a predetermined line; however, there are some whose center is deviated from the predetermined line. Therefore, as in the first embodiment, the arrangement length L1 (see Fig. 2) of each of the nozzles 5a is made longer than is required in consideration of the variation. Assuming that the length when the width-direction length L2 of the tablets T conveyed in three lines is the maximum is the maximum length, the arrangement length L1 of the nozzles 5a is set to be the maximum length or longer. In the fourth embodiment, the maximum length is determined theoretically or experimentally in advance based on the interval between the suction slits 3g, the size of the tablets T and the variation thereof, the maximum deviation amount, and the like.

The controller 9 has a counting function of counting the number of times the nozzles 5a are driven for each of the applicator heads 5A, 5B and 5C. The controller 9 counts the number of times the nozzles 5a are driven (i.e., the number of times of ejection) in each of the applicator heads 5A, 5B and 5C after printing is started by each of the applicator heads 5A, 5B and 5C. When the total number of driving times of the nozzles 5a in any one of the applicator heads 5A, 5B and 5C, the total number of driving times of the nozzles 5a in each of the sections A to C of each of the applicator heads 5A, 5B and 5C, or the number of times the individual nozzles 5a are driven reaches the number of driving times set in the storage (hereinafter referred to as "set drive count"), the controller 9 performs the switching control of the three sections A to C of each of the applicator heads 5A, 5B and 5C. When the count value reaches the set drive count, the controller 9 resets the count value, and starts counting again from zero. The operation of the fourth embodiment is basically similar to that of the first embodiment except for the switching control based on the number of times the nozzles 5a are driven in each of the applicator heads 5A, 5B and 5C.

As with the set time according to the first embodiment, the set drive count for switching the sections A to C used for printing refers to the upper limit value of the number of times printing on the tablets T can be continuously performed in a state where ink can be stably discharged from each of the nozzles 5a of the applicator heads 5A, 5B and 5C without maintenance such as wiping in the applicator heads 5A, 5B and 5C. The set drive count is set in advance in the storage of the controller 9.

According to this embodiment, it is possible to count the number of driving times for each drive element. When at least one drive element is driven, the number of driving times of the applicator head 5A is counted as once and incremented.

In the fourth embodiment, the applicator heads 5A, 5B and 5C used for printing on the tablets T are sequentially switched according to the total number of driving times of the drive element of the nozzles 5a in each of the applicator heads 5A, 5B and 5C, the total number of driving times of the nozzles 5a in each of the sections A to C of each applicator head, or the number of times each of the nozzles 5a is driven. In the first to third embodiments, the tablets T are conveyed as being aligned by the recesses 3a, and printing is performed thereon. Therefore, the applicator heads are used at the same frequency, and the timing for switching the applicator heads 5A, 5B and 5C can be appropriately adjusted by managing the set time. On the other hand, in the fourth embodiment, the intervals at which the tablets T are conveyed are not constant. Accordingly, the frequency of use of the nozzles 5a varies depending on the applicator heads 5A, 5B and 5C. In this case, as described above, the maintenance can be performed according to the frequency of the actual use of the applicator heads 5A, 5B and 5C by counting the number of times the drive element is driven. This eliminates the need to stop printing on the tablets T for unnecessary maintenance, which increases the productivity. Further, printing can be stably performed even on the tablets T randomly conveyed.

For example, as illustrated in Fig. 16, when the tablets T are conveyed at irregular intervals, and the tablets T to be printed are conveyed frequently through the applicator heads 5A and 5B (first line and second line) while the tablets T to be printed are not conveyed frequently through the applicator head 5C (third line) as compared to the applicator heads 5A and 5B, the number of driving times greatly differs among the applicator heads 5A, 5B and 5C even in the same ten minutes. More specifically, the number of driving times greatly differs among the nozzles 5a corresponding to the section A of the applicator head 5A, the section B of the applicator head 5B, and the section C of the applicator head 5C. In this case, the applicator head 5A, which has been used frequently at the time when the set time has elapsed, may be past the time when it needs to have maintenance. If the switching of the sections is controlled based on the number of driving times of the nozzles 5a, the sections are switched at an appropriate timing. As a result, even when the tablets T are conveyed randomly, the switching of the sections A to C to be used and maintenance can be performed according to the frequency of actual use of the applicator heads 5A, 5B and 5C.

For example, if a larger number of the tablets T are conveyed in the first line as compared to others and the section A of the applicator head 5A in charge of printing for the first line has reached a predetermined number of driving times (set drive count), the applicator head 5A stops printing in section A, and printing is performed in another section. As an example, if the section of the applicator head 5A used for printing is switched from the section A to the section B, the section used in printing for the first line is switched to the section A of the applicator head 5B. At this time, the switching is performed even when the number of driving times has not reached the predetermined value (set drive count) in the section B of the applicator head 5B. The section B of the applicator head 5B may be used again for printing until the predetermined number of times is reached by storing the number of driving times of the section B. In addition, the section of the applicator head with the smallest number of driving times may be used for printing by comparing drive counts in all the sections. For example, when the third line has the least tablets T, the number of driving times is the smallest in the section C of the applicator head 5C. The section for use is switched to the section C in the applicator head 5A, and the section for use is switched to the section A in the applicator head 5C such that printing for the first line is performed in the section A. When the maintenance of the applicator heads is performed while all the sections of the applicator heads are used or according to the state of the predetermined number of driving times of each of the applicator heads. By appropriately allocating each section of the applicator heads not having maintenance, maintenance can be carried out without stopping printing. There may be cases where all printing has to be stopped. However, if the drive counts of all the applicator heads are averaged as described above, it is possible to lengthen the time until when maintenance is required.

In this embodiment also, in the switching operation of the applicator heads 5A to 5C used for printing, the applicator head used for printing on the tablets T is switched to the applicator head positioned on the upstream side or the applicator head positioned on the downstream side. Therefore, as in the first embodiment, in order to prevent erroneous printing in which printing is not performed or performed twice on a tablet, it is preferable to appropriately adjust the timing to stop the use of the applicator head for printing and to start the use of the applicator head for printing.

### (Fifth Embodiment)

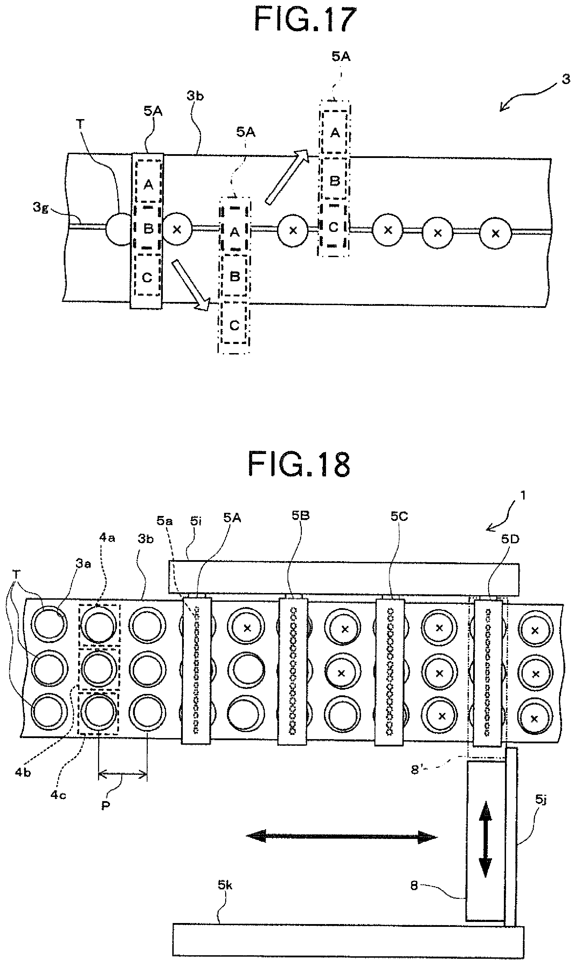

In the following, a fifth embodiment is described with reference to Fig. 17

A tablet printing device of the fifth embodiment is different from the tablet printing device 1 of the fourth embodiment in that the belt 3b has one suction slit (3g), two fewer than that of the fourth embodiment has, and there is only one applicator head (5A). Otherwise, the tablet printing device of fifth embodiment is similar to that of the fourth embodiment.

As illustrated in Fig. 17, the belt 3b has a line of the suction slit 3g extending along the conveyance direction. The applicator head 5A performs printing on the tablets T that are conveyed in a line on the belt 3b. Sections are defined in advance for the applicator head 5A so as to cover a length perpendicular to the conveyance direction of the tablets T or more. The sections are determined by dividing the length of the nozzle array of the applicator head 5A by an integral number (three in Fig. 17). The number of sections is not related to the number of lines of the tablets T to be conveyed.

When printing is performed on the tablets T, the applicator head 5A is moved in a direction perpendicular to the conveyance direction by a movement device (not illustrated in Fig. 17) similar to the horizontal movement devices 5e illustrated in Fig. 2 every time the set drive count is reached, and the sections A to C used for printing are switched. For example, the nozzles 5a located in the section A of the applicator head 5A are used for printing on the tablets T. When the number of driving times of the applicator head 5A reaches the set drive count, the applicator head 5A moves in a direction perpendicular to the conveyance direction. Then, the nozzles 5a located in the section B of the applicator head 5A are used for printing on the tablets T. In Fig. 17, the applicator head 5A indicated by a two-dot chain line represents how the sections A to C are switched in this manner. Although Fig. 17 illustrates a plurality of applicator heads (5A), this is for easier understanding of the switching of the sections, and the applicator head does not move in the directions indicated by the arrows.

According to the fifth embodiment, the applicator head 5A is moved in the direction perpendicular to the conveyance direction according to the number of times the drive element of the nozzles 5a of the applicator head 5A is driven, and the sections A to C used for printing are switched. Thus, it is possible to achieve the same operational effects as in the fourth embodiment. The fifth embodiment can be applied to the configuration in which the tablets T are conveyed as being aligned on the belt having the recesses 3a as with the belt 3b of the first embodiment.

### (Sixth Embodiment)

In the following, a sixth embodiment is described with reference to Fig. 18.

A tablet printing device of the sixth embodiment is different from the tablet printing device 1 of the second embodiment in the presence of a vertical movement device 5i in place of the horizontal movement devices 5e to 5h, and in that the maintenance device 8 is smaller and moves. Otherwise, the tablet printing device of sixth embodiment is similar to that of the second embodiment.

As illustrated in Fig. 18, the vertical movement device 5i is arranged at a position adjacent to the side of the belt 3b and corresponding to the head unit 5. The vertical movement device 5i supports each of the applicator heads 5A, 5B, 5C and 5D vertically movably, and moves them to a printing position on the conveyor 3 and a maintenance position on the belt 3b above the printing position. The maintenance position for each of the applicator heads 5A to 5D is set such that the maintenance device 8 can enter the space between the applicator head subjected to maintenance and the conveyor 3 in the vertical direction. A plurality of single-axis robots such as ball screw robots, linear motor robots, air cylinder robots, or the like can be used as the vertical movement device 5i.

The maintenance device 8 is movably supported in a direction perpendicular to the conveyance direction by a first movement device 5j arranged horizontally along a direction perpendicular to the conveyance direction. The maintenance device 8 is movable to a position in the vertical direction between the applicator head subjected to maintenance and the conveyor 3 (e.g., a position indicated by two-dot chain line 8'in Fig. 18). Further, the maintenance device 8 is supported via the first movement device 5j movably in the conveyance direction by a second movement device 5k arranged horizontally along the conveyance direction, and is movable in the conveyance direction. As the first movement device 5j and the second movement device 5k, a single-axis robot such as a ball screw robot, a linear motor robot, an air cylinder robot, or the like can be used.

The tablet printing device 1 of the sixth embodiment operates in the switching order according to the second embodiment. Printing is performed on the tablets T in the same manner as in the first embodiment. Described below is an operation at the time of maintenance.

As illustrated in Fig. 18, for example, when the applicator head 5D is subjected to maintenance, the applicator head 5D is raised from the printing position to the maintenance position by the vertical movement device 5i. Then, the maintenance device 8 is moved by the first movement device 5j and the second movement device 5k to a position between the applicator head 5D subjected to maintenance and the conveyor 3 in the vertical direction (position indicated by two-dot chain line 8'), and performs the maintenance of the applicator head 5D. Even during the maintenance operation, printing is continued by the other applicator heads 5A to 5C.

According to the sixth embodiment, it is possible to achieve the same operational effects as in the second embodiment. In addition, the applicator heads 5A, 5B, 5C and 5D are not moved by a distance in the longitudinal direction thereof or a distance corresponding to the width of the belt 3b. Since maintenance can be performed with a comparatively short moving distance, the positions of the applicator heads 5A, 5B, 5C and 5D can be easily maintained constant. This makes it possible to suppress the occurrence of printing deviation caused by the shift of the stop position due to the movement of each of the applicator heads 5A, 5B, 5C and 5D. Thus, the printing accuracy can be improved.

### (Other Embodiments)

Although several embodiments have been described, these embodiments are presented by way of example and are not intended to limit the scope of the invention. These novel embodiments can be implemented in various other forms, and susceptible to various omission, modifications, and alternative forms without departing from the scope of the invention.

For example, although the tablets T are described as being conveyed in three lines by the conveyor 3, the embodiments are not limited to three lines. The tablets T may be conveyed in in a single line, two lines, or four or more lines.

Further, the set drive count of the applicator head and the set time stored in the storage of the controller 9 are described as the upper limit value of the time or the drive count in which printing on the tablets T can be continuously performed in a state where ink can be stably discharged from each of the nozzles 5a of the applicator heads 5A, 5B and 5C without maintenance such as wiping. However, even if the time or the drive count exceeds the upper limit value, the discharge state of the ink is not impaired immediately. The value is determined to allow for margin. For example, as described above, the applicator head used for printing the tablets T is switched such that the applicator head on the upstream side or the applicator head on the downstream side performs printing on the tablets T. This may result in that printing is not performed on a tablet, and printing is performed twice on a tablet. Adjustment of the timing to stop the use of the applicator head and to start the use of the applicator head at the time of switching the applicator heads is considered as margin.

Although the switching of the applicator heads or the sections is described as being performed based on the set drive count of the applicator heads or the set time stored in the storage of the controller 9, it is not so limited. The applicator heads may be switched based on the set time or the set drive count only at the first time, and thereafter, switching may be performed every time the maintenance of each applicator head is completed.

Although the counting of the elapsed time and the number of driving times of the applicator heads are described as being started from the start of printing by the applicator heads, it is not so limited. The counting need not necessarily be started from the start of printing. For example, the counting may be started from when the supply of the tablets T starts. The timing to start the counting of the elapsed time may be set as appropriate.

In addition, although the count value is described as being reset each time the count value reaches the set time or the set drive count of the applicator heads, it is not so limited. Regarding the timing to reset the count value, the counting may be continued until all sections determined in advance are used for printing, and the count value may be reset only after maintenance is performed.

In addition, although the embodiments describe examples in which the sections are switched depending on the elapsed time or the number of times the applicator heads are driven, or based on the set time or the set drive count, in each of the embodiments, either of the time or the drive count can be used as a reference for the switching operation. Further, instead of counting the elapsed time or the number of times the applicator heads are driven, the number of the tablets T printed may be counted. For example, the sections A to C of the applicator heads 5A to 5D may be switched every time printing is performed on 1000 thousand tablets.

Further, the plurality of applicator heads may be arranged side by side in a direction perpendicular to the conveyance direction. In this case, the arrangement length L1 of the nozzles 5a, i.e., the length of the nozzle array, corresponds to the sum of the lengths of the nozzle arrays of the individual applicator heads. Therefore, the length of the nozzle array is not limited to the length of the nozzle array of one applicator head, but may be the sum of the lengths of the nozzle arrays of the individual applicator heads.

Further, the plurality of applicator heads may be arranged side by side in a direction crossing the conveyance direction. That is, the applicator heads are arranged in an oblique direction with respect to the conveyance direction. In this case also, the arrangement length L1 of the nozzles 5a, i.e., the length of the nozzle array, corresponds to the sum of the lengths of the nozzle arrays of the individual applicator heads.

Further, the applicator heads are arranged in a direction crossing the conveyance direction. In other words, the direction in which the plurality of nozzles of the applicator heads are arrayed are oblique so as to intersect with the conveyance direction of the tablets T. In this case, each section has a length that covers the nozzles 5a of the oblique nozzle array and is equal to or longer than the length of the component perpendicular to the conveyance direction of the tablets T. The length of the nozzle array in a direction perpendicular to the conveyance direction is at least equal to or longer than the length of the tablets T in a direction perpendicular to the conveyance direction.

Besides, the length L1 of the nozzle array of each applicator head is described as being set to be slightly longer than the width-direction length L2 of the three lines of the tablets T conveyed by the conveyor 3; however, the length L1 of the nozzle array may be set to in charge of one section as a length that can cover the width-direction length of the tablets T of one line.

In the second embodiment, the length L1 of the nozzle array of each of the applicator heads 5A to 5D is described as being slightly longer than the width-direction length L2 of the three lines of the tablets T conveyed on the conveyor 3; however, the length L1 of the nozzle array may be a length that can cover the width-direction length of the tablets T of at least one line. In this case, the driving of the horizontal movement devices 5e to 5h may be controlled such that each of the applicator heads 5A to 5D is located at a position opposite to the line of the tablets T to be printed. With this, the maintenance of the applicator heads 5A to 5D can be performed without stopping printing on the tablets T conveyed in a plurality of lines.

In the second embodiment, there are provided the four applicator heads 5A to 5D, one more than the number of lines of the tablets T conveyed by the conveyor 3; however, it is not so limited. There may be two more applicator heads than the number of lines of the tablets T, or even more applicator heads.

In the fourth or fifth embodiment, slit(s) extending in the conveyance direction, such as the suction slit(s) 3g, is provided as a suction structure; however, it is not so limited. For example, small circular suction holes may be arranged in the conveyance direction. The suction holes may be arranged regularly or irregularly.

Further, the belt 3b having the recess 3a according to the first, second, third, and sixth embodiments may be used in the fourth and fifth embodiments. Conversely, the belt 3b having the suction slit(s) 3g according to the fourth and fifth embodiment may be used in the first, second, third and sixth embodiments. Therefore, various belts can be used as the belt 3b.

Besides, when the printing is interrupted, the tablets T, on which printing cannot be performed due to the continuation of the transport of the tablets T without stopping the driving of the belt 3b, may be collected by an unprinted tablet collecting unit (not illustrated), and supplied to the hopper 2 again so as to be reused.

Examples of the tablets T include tablets to be used for medicine, eating, washing, industrial, or aroma. Also, examples of the tablets include uncoated tablets, sugar-coated tablets, film-coated tablets, enteric coated tablets, gelatin-coated tablets, multilayered tablets, and dry-coated tablets. In addition, various capsule tablets (capsules) such as hard capsules and soft capsules can also be included in the tablets. Further, examples of the shape of the tablets include disk shape, lens shape, triangle shape, oval shape, and the like.

### [Explanation of Symbols]

- **1**: Tablet printing device
- **3**: Conveyor
- **4**: Image pickup device
- **5**: Head unit
- 5A-5D: Applicator head
- **8**: Maintenance device
- **9**: Controller
- T: Tablet

## Claims

1. A tablet printing device (1), comprising:
a conveyer (3) configured to convey tablets (T) along a line in a conveyance direction;
an applicator head (5A) including a plurality of nozzles (5a) arranged in a direction crossing the conveyance direction of the tablets (T) conveyed by the conveyer (3), configured to perform printing on the tablets (T) by ejecting a liquid from the nozzles (5a);
a horizontal movement device (5e) configured to move the applicator head (5A) in the direction perpendicular to the conveyance direction; and
a controller (9) configured to control ejection of the liquid from the nozzles (5a) of the applicator head (5A), wherein
the nozzles (5a) of the applicator head (5A) are divided into a plurality of sections (A, B, C) determined in advance,
a length (L1) of an array of the nozzles (5a) in the direction perpendicular to the conveyance direction in each of the sections (A, B, C) is equal to or longer than a length of each of the tablets (T) in the direction perpendicular to the conveyance direction, and
the controller (9) is further configured to control switching of the nozzles (5a) such that the nozzles (5a) used for printing on the tablets (T) are switched among the nozzles (5a) by
controlling the horizontal movement device (5e) to move the applicator head (5A) by a length of each of the sections (A, B, C) or by an integer multiple of said length to perform switching of the sections (A, B, C) when a preset time has elapsed after start of printing or when the nozzles (5a) are driven a preset number of times, until the nozzles (5a) in all the sections (A, B, C) face the line by the switching and specifying the one of the sections (A, B, C) that faces the line to perform printing on the tablets (T) conveyed along the line.

2. The tablet printing device (1) according to claim 1, further comprising:
a maintenance device (8) configured to perform maintenance of the applicator head (5A), wherein
the horizontal movement device (5e) configured to move the applicator head (5A) to a position on the conveyer (3) and a position on the maintenance device (8).

3. A tablet printing method for performing printing on tablets (T) conveyed by a conveyer (3) along a line in a conveyance direction by ejecting a liquid from an applicator head (5A), the method comprising:
performing, by the applicator head (5A) including a plurality of nozzles (5a) arranged in a direction crossing the conveyance direction of the tablets (T), printing on the tablets (T) by ejecting the liquid from the nozzles (5a), wherein
the nozzles (5a) of the applicator head (5A) are divided into a plurality of sections (A, B, C) determined in advance, and
a length (L1) of an array of the nozzles (5a) in a direction perpendicular to the conveyance direction in each of the sections (A, B, C) is equal to or longer than a length of each of the tablets (T) in the direction perpendicular to the conveyance direction; and
switching of the nozzles (5a) used for printing on the tablets (T) among the nozzles (5a) by
horizontally moving the applicator head (5A) in the direction perpendicular to the conveyance direction by a length of each of the sections (A, B, C) or by an integer multiple of said length to perform switching of the sections (A, B, C) when a preset time has elapsed after start of printing or when the nozzles (5a) are driven a preset number of times, until the nozzles (5a) in all the sections (A, B, C) face the line by the switching and specifying the one of the sections (A, B, C) that faces the line to perform printing on the tablets (T) conveyed along the line.

## Patentansprüche

1. Tablettendruckvorrichtung (1), mit:
einem Fördermittel (3), das dazu ausgebildet ist, Tabletten (T) entlang einer Linie in einer Beförderungsrichtung zu befördern;
einem Applikatorkopf (5A), der eine Mehrzahl von Düsen (5a) aufweist, die in einer Richtung angeordnet sind, die die Beförderungsrichtung der Tabletten (T), die durch das Fördermittel (3) befördert werden, kreuzt, der dazu ausgebildet ist, ein Drucken auf den Tabletten (T) durch Ausstoßen einer Flüssigkeit aus den Düsen (5a) durchzuführen;
einer Horizontalbewegungsvorrichtung (5e), die dazu ausgebildet ist, den Applikatorkopf (5A) in der Richtung senkrecht zu der Beförderungsrichtung zu bewegen; und
einer Steuerung (9), die dazu ausgebildet ist, einen Ausstoß der Flüssigkeit aus den Düsen (5a) des Applikatorkopfs (5A) zu steuern, bei der
die Düsen (5a) des Applikatorkopfs (5A) in eine Mehrzahl von Abschnitten (A, B, C), die im Voraus bestimmt sind, aufgeteilt sind,
eine Länge (L1) einer Anordnung der Düsen (5a) in der Richtung senkrecht zu der Beförderungsrichtung in jedem der Abschnitte (A, B, C) gleich oder länger als eine Länge jeder der Tabletten (T) in der Richtung senkrecht zu der Beförderungsrichtung ist, und
die Steuerung (9) ferner dazu ausgebildet ist, ein Wechseln der Düsen (5a) zu steuern, so dass die Düsen (5a), die zum Drucken auf den Tabletten (T) verwendet werden, unter den Düsen (5a) gewechselt werden, durch
Steuern der Horizontalbewegungsvorrichtung (5e) zum Bewegen des Applikatorkopfs (5A) um eine Länge jedes der Abschnitte (A, B, C) oder um ein ganzzahliges Vielfaches besagter Länge, so dass ein Wechselns der Abschnitte (A, B, C) durchgeführt wird, wenn eine voreingestellte Zeit nach einem Start eines Druckens verstrichen ist, oder wenn die Düsen (5a) eine voreingestellte Anzahl von Malen betrieben werden, bis die Düsen (5a) in allen Abschnitten (A, B, C) der Linie durch das Wechseln gegenüberliegen, und Spezifizieren des einen der Abschnitte (A, B, C), der der Linie gegenüberliegt, zum Durchführen eines Druckens auf den Tabletten (T), die entlang der Linie befördert werden.

2. Tablettendruckvorrichtung (1) nach Anspruch 1, ferner mit:
einer Wartungsvorrichtung (8), die dazu ausgebildet ist, eine Wartung des Applikatorkopfs (5A) durchzuführen, bei der
die Horizontalbewegungsvorrichtung (5e), die dazu ausgebildet ist, den Applikatorkopf (5A) zu einer Position auf dem Fördermittel (3) und einer Position auf der Wartungsvorrichtung (8) zu bewegen.

3. Tablettendruckverfahren zum Durchführen eines Druckens auf Tabletten (T), die durch ein Fördermittel (3) entlang einer Linie in einer Beförderungsrichtung befördert werden, durch Ausstoßen einer Flüssigkeit aus einem Applikatorkopf (5A), mit:
Durchführen, durch den Applikatorkopf (5A), der eine Mehrzahl von Düsen (5a) aufweist, die in einer Richtung angeordnet sind, die die Beförderungsrichtung der Tabletten (T) kreuzt, eines Druckens auf den Tabletten (T) durch Ausstoßen der Flüssigkeit aus den Düsen (5a), bei dem
die Düsen (5a) des Applikatorkopfs (5A) in eine Mehrzahl von Abschnitten (A, B, C), die im Voraus bestimmt sind, aufgeteilt sind, und
eine Länge (L1) einer Anordnung der Düsen (5a) in einer Richtung senkrecht zu der Beförderungsrichtung in jedem der Abschnitte (A, B, C) gleich oder länger als eine Länge jeder der Tabletten (T) in der Richtung senkrecht zu der Beförderungsrichtung ist; und
Wechseln der Düsen (5a), die zum Drucken auf den Tabletten (T) verwendet werden, unter den Düsen (5a) durch
horizontales Bewegen des Applikatorkopfs (5A) in der Richtung senkrecht zu der Beförderungsrichtung um eine Länge jedes der Abschnitte (A, B, C) oder um ein ganzzahliges Vielfaches besagter Länge zum Durchführen eines Wechselns der Abschnitte (A, B, C), wenn eine voreingestellte Zeit nach einem Start eines Druckens verstrichen ist, oder wenn die Düsen (5a) eine voreingestellte Anzahl von Malen betrieben werden, bis die Düsen (5a) in allen Abschnitten (A, B, C) der Linie durch das Wechseln gegenüberliegen, und Spezifizieren des einen der Abschnitte (A, B, C), der der Linie gegenüberliegt, zum Durchführen eines Druckens auf den Tabletten (T), die entlang der Linie befördert werden.

## Revendications

1. Dispositif d'impression de comprimé (1), comprenant :
un convoyeur (3) configuré pour transporter des comprimés (T) le long d'une ligne dans une direction de transport ;
une tête d'application (5A) comprenant une pluralité de buses (5a) disposées dans une direction croisant la direction de transport des comprimés (T) transportés par le convoyeur (3), configurée pour effectuer une impression sur les comprimés (T) en éjectant un liquide à partir des buses (5a) ;
un dispositif de déplacement horizontal (5e) configuré pour déplacer la tête d'application (5A) dans la direction perpendiculaire à la direction de transport ; et
un dispositif de commande (9) configuré pour commander l'éjection du liquide depuis les buses (5a) de la tête d'application (5A), dans lequel
les buses (5a) de la tête d'application (5A) sont divisées en une pluralité de sections (A, B, C) déterminées à l'avance ;
une longueur (L1) d'un réseau de buses (5a) dans la direction perpendiculaire à la direction de transport dans chacune des sections (A, B, C) est égale ou supérieure à une longueur de chacun des comprimés (T) dans la direction perpendiculaire à la direction de transport, et
le dispositif de commande (9) est en outre configuré pour commander la commutation des buses (5a) de sorte que les buses (5a) utilisées pour l'impression sur les comprimés (T) sont commutées parmi les buses (5a) en
commandant le dispositif de déplacement horizontal (5e) pour déplacer la tête d'application (5A) d'une longueur de chacune des sections (A, B, C) ou d'un multiple entier de ladite longueur pour effectuer la commutation des sections (A, B, C) lorsqu'un temps prédéterminé s'est écoulé après le début de l'impression ou lorsque les buses (5a) sont entraînées un nombre prédéterminé de fois, jusqu'à ce que les buses (5a) dans toutes les sections (A, B, C) fassent face à la ligne par la commutation et la spécification de l'une des sections (A, B, C) qui fait face à la ligne pour effectuer l'impression sur les comprimés (T) transportés le long de la ligne.

2. Dispositif d'impression de comprimé (1) selon la revendication 1, comprenant en outre :
un dispositif d'entretien (8) configuré pour effectuer l'entretien de la tête d'application (5A), dans lequel
le dispositif de déplacement horizontal (5e) configuré pour déplacer la tête d'application (5A) vers une position sur le convoyeur (3) et une position sur le dispositif d'entretien (8).

3. Procédé d'impression de comprimés pour effectuer une impression sur des comprimés (T) transportés par un convoyeur (3) le long d'une ligne dans une direction de transport en éjectant un liquide à partir d'une tête d'application (5A), le procédé comprenant les étapes consistant à :
réaliser, par la tête d'application (5A) comprenant une pluralité de buses (5a) agencées dans une direction croisant la direction de transport des comprimés (T), une impression sur les comprimés (T) en éjectant le liquide depuis les buses (5a), dans lequel
les buses (5a) de la tête d'application (5A) sont divisées en une pluralité de sections (A, B, C) déterminées à l'avance, et
une longueur (L1) d'un réseau de buses (5a) dans une direction perpendiculaire à la direction de transport dans chacune des sections (A, B, C) est égale ou supérieure à une longueur de chacun des comprimés (T) dans la direction perpendiculaire à la direction de transport ; et
commuter les buses (5a) utilisées pour l'impression sur les comprimés (T) parmi les buses (5a) en
déplaçant horizontalement la tête d'application (5A) dans la direction perpendiculaire à la direction de transport d'une longueur de chacune des sections (A, B, C) ou d'un multiple entier de ladite longueur pour réaliser la commutation des sections (A, B, C) lorsqu'un temps prédéterminé s'est écoulé après le début de l'impression ou lorsque les buses (5a) sont entraînées un nombre prédéterminé de fois, jusqu'à ce que les buses (5a) dans toutes les sections (A, B, C) fassent face à la ligne par la commutation et en spécifiant l'une des sections (A, B, C) qui fait face à la ligne pour réaliser l'impression sur les comprimés (T) transportées le long de la ligne.
